# EUROPEAN PATENT SPECIFICATION

(11) **EP 2 347 948 B1**
(45) Date of publication and mention of the grant of the patent: **04.11.2015**
(21) Application number: 10818852.5
(22) Date of filing: 24.09.2010
(51) Int. Cl.: B62J 17/00, B62K 11/10

(54) **Motorcycle**
Motorrad
Motocyclette

(30) Priority: 25.09.2009 JP 2009220839
(43) Date of publication of application: 27.07.2011
(73) Proprietor: Yamaha Hatsudoki Kabushiki Kaisha, Iwata-shi, Shizuoka 438-8501 (JP)
(72) Inventor: NOMURA, Yasushi, Iwata-shi Shizuoka 438-8501 (JP); SHIBATA, Masanori, Iwata-shi Shizuoka 438-8501 (JP); IKENISHI, Yoshinari, Iwata-shi Shizuoka 438-8501 (JP)
(74) Representative: Grünecker Patent- und Rechtsanwälte PartG mbB
(86) International application number: PCT/JP2010/066540
(87) International publication number: WO 2011/037180

(56) References cited:
- EP-A2- 0 376 352
- JP-A- 5 065 086
- JP-A- 9 249 171
- JP-A- 10 016 854
- JP-A- 62 116 372
- JP-A- 63 215 471
- JP-A- 2009 154 662
- JP-U- 58 132 727
- US-A1- 2006 038 667

## Description

The present invention relates to a motorcycle according to the preamble of independent claim 1. Such a motorcycle can be taken from the prior art document EP 0 376 352 A2. More particularly, the present invention relates to a motorcycle including a so-called side radiator disposed outwards of a crankshaft in a transverse direction of the vehicle.

Motorcycles including a so-called side radiator have been described so far, for instance, in the following JP-A-2007-106382. The side radiator refers to a radiator disposed outwards of a crankshaft in a transverse (width) direction of the vehicle. For preventing increase in the transverse motorcycle size, the side radiator is normally disposed while a wind receiving surface thereof for receiving airflow is oriented transversely outwards. It should be noted in the present specification that the term "transversely outwards" and its related terms refer to a direction away from the transverse center of the vehicle along the transverse direction. On the other hand, the term "transversely inwards" and its related terms refer to a direction closer to the transverse center of the vehicle along the transverse direction.

When the side radiator is used in a motorcycle, distance is reduced either between a cylinder head and the radiator or between a cylinder body and the radiator. Therefore, distance can be reduced for either a coolant path connecting the cylinder head and the radiator or a coolant path connecting the cylinder body and the radiator. Further, a radiator fan can be directly driven by a crankshaft when the side radiator is used. Simply put, the radiator and its periphery can be simply structured due to usage of the side radiator. Yet further, usage of the side radiator eliminates necessity to ensure a space positioned forwards of the engine for disposing the radiator and the coolant path/paths. Therefore, the side radiators have been increasingly widely used for a variety of motorcycles including motorcycles with a small engine capacity.

As described above, the side radiator is disposed while the wind receiving surface thereof is oriented transversely outwards. Therefore, the side radiator does not easily receive airflow directly unlike the normal radiators oriented forwards in a plan view. Therefore, a radiator fan is normally disposed transversely inwards of the side radiator. The radiator fan inhales air from transversely outward side of the side radiator and supplies the inhaled air to the side radiator as the cooling airflow. Therefore, it is preferable to avoid a structure that a side cowl is disposed transversely outwards of the side radiator for achieving a high cooling efficiency of the coolant in the radiator. This is because of the reason that the structure enhances an efficiency of supplying the cooling airflow to the side radiator.

However, the side cowl may be required to be extended rearwards, for instance, when a tandem foot rest is disposed. Further, the side cowl may be extended rearwards because of other reasons. In such cases, the front portion of the side radiator may be covered with the side cowl.

When the front portion of the side radiator is partially covered with the side cowl, the efficiency of supplying the cooling airflow to the side radiator is likely to be reduced. Therefore, some sort of countermeasure is required for enhancing the efficiency of supplying the cooling airflow to the side radiator.

For example, as illustrated in FIG. 17, JP-A-2007-106382 describes the structure that a fin 101 extended transversely outwards is disposed as one of the countermeasures for enhancing the efficiency of supplying the cooling airflow to the side radiator. The backwardly flowing air is guided to the side radiator 100 by disposing the fin 101. As a result, it is possible to enhance the efficiency of supplying the cooling airflow to the side radiator 100.

However, the radiators have been recently demanded to have a higher cooling efficiency in response to requests for increase in the engine capacity. Therefore, the motorcycles adopting the side radiator have been increasingly demanded to have a higher efficiency of supplying the airflow to the side radiator.

It is an object of the present invention to provide a motorcycle with enhanced efficiency of supplying the airflow to a side radiator

According to the present invention said object is solved by a motorcycle having the features of independent claim 1. Preferred embodiments are laid down in the dependent claims.

Accordingly, it is provided a motorcycle that includes a vehicle body frame, a foot rest, an engine, a radiator, a side cover, a left lower cover and a right lower cover. The vehicle body frame includes a head pipe portion, a down frame portion, a bottom frame portion and a rear frame portion. The down frame portion is extended downwards from the head pipe portion. The bottom frame portion is extended rearwards from a bottom end of the down frame portion. The rear frame portion is extended upwards from a rear end of the bottom frame portion. The foot rest is disposed over the bottom frame portion and includes a transversely flat shape. The engine includes a transversely extended crankshaft and is pivotably supported by the rear frame portion. The radiator is disposed transversely outwards of the crankshaft and covers the crankshaft from a transversely outward side.

The side cover at least partially covers the radiator from a transversely outward side of the radiator. The left lower cover at least partially covers the bottom frame portion from a left side of the bottom frame portion. The right lower cover at least partially covers the bottom frame portion from a right side of the bottom frame portion. Further, a wind guide path is disposed transversely between the left and right lower covers and under the foot rest. The wind guide path guides an air to a space between the side cover and the radiator.

### ADVANTAGEOUS EFFECTS OF INVENTION

According to the present invention, it is possible to enhance an efficiency of supplying the airflow to a side radiator in a motorcycle.

### BRIEF DESCRIPTION OF THE DRAWINGS

- FIG. 1: is a schematic left side view of a motorcycle according to an exemplary embodiment.
- FIG. 2: is a schematic plan view of the motorcycle according to the exemplary embodiment.
- FIG. 3: is a schematic right side view of the motorcycle for explaining a vehicle body frame.
- FIG. 4: is a schematic cross-sectional view of a portion of an engine.
- FIG. 5: is a left side view of the engine.
- FIG. 6: is a schematic front view of the motorcycle according to the exemplary embodiment without illustration of a front fork, a front wheel, a handle and the like.
- FIG. 7: is a cross-sectional view of the motorcycle sectioned along a line VII-VII in FIG. 6.
- FIG. 8: is a cross-sectional view of the motorcycle sectioned along a line VIII-VIII in FIG. 1.
- FIG. 9: is a cross-sectional view of the motorcycle sectioned along a line IX-IX in FIG. 1.
- FIG. 10: is a side view of a wild guide member.
- FIG. 11: is a front view of the wind guide member.
- FIG. 12: is a cross-sectional view of the wind guide member sectioned along a line XII-XII in FIG. 10.
- FIG. 13: is a cross-sectional view of the wind guide member sectioned along a line XIII-XIII in FIG. 10.
- FIG. 14: is a plan view of a vehicle body frame and a bottom cover of a motorcycle according to another exemplary embodiment.
- FIG. 15: is a side view of a wind guide member of the motorcycle according to another exemplary embodiment.
- FIG. 16: is a schematic perspective view of a portion of the motorcycle according to another exemplary embodiment.

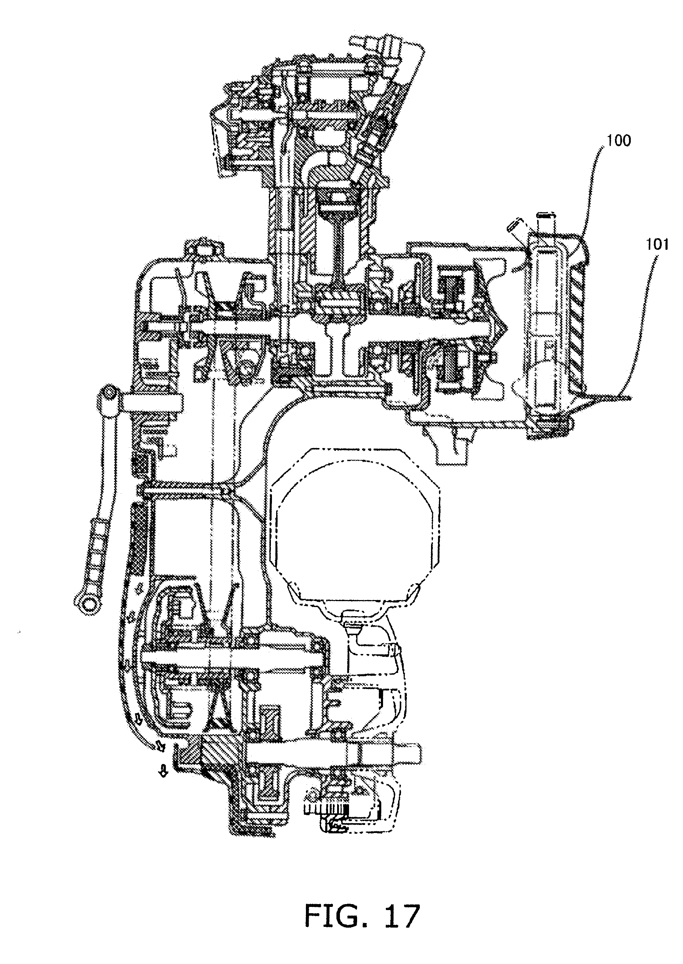

- FIG. 17: is a cross-sectional view of an engine described in JP-A-2007-106382.

### DESCRIPTION OF EMBODIMENTS

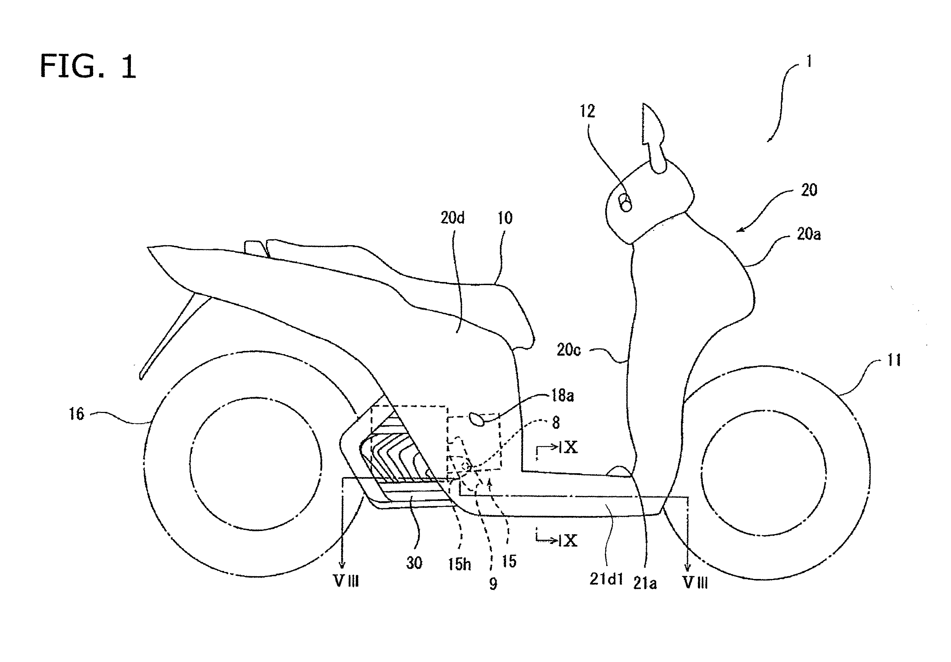

An exemplary preferred embodiment of the present invention will be hereinafter explained by exemplifying a motorcycle 1 illustrated in FIGS. 1 to 3 as a scooter. In the present invention, however, the motorcycle is not limited to a scooter. In the present invention, the motorcycle refers to a widely-defined motorcycle. In the present invention, the motorcycle includes a narrowly-defined motorcycle of an on-road type, a scooter, a moped, an off-road vehicle and the like. Further, the motorcycle of the present invention includes a type of motorcycle provided with a plurality of wheels at least as either front wheels or rear wheels.

It should be noted that the directional terms such as "front", "rear", "right" and "left" and their related terms hereinafter refer to directions seen from a rider seated on a seat 10.

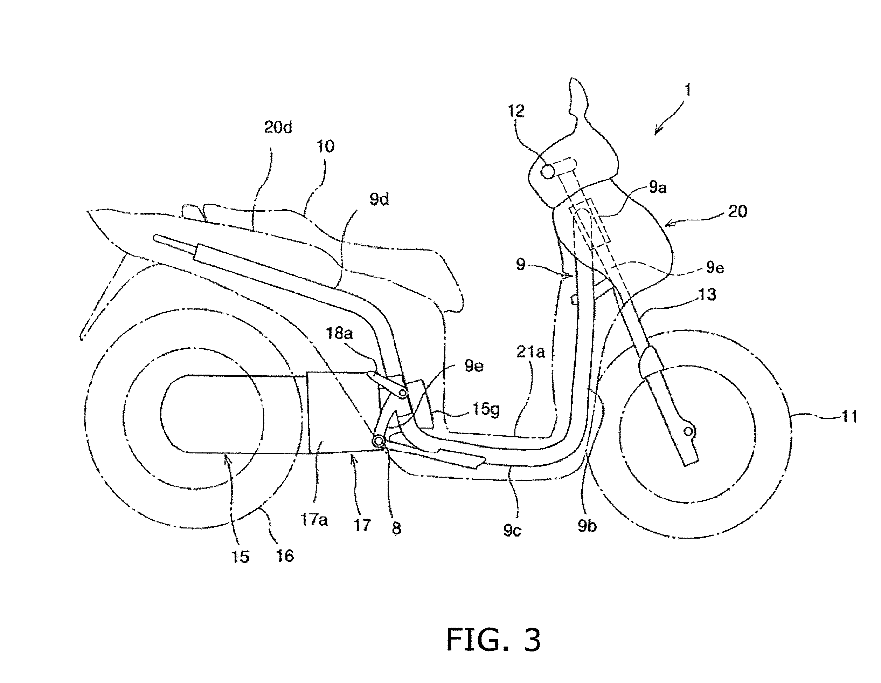

As illustrated in FIG. 3, the motorcycle 1 according to the present exemplary embodiment includes a vehicle body frame 9. The vehicle body frame 9 includes a head pipe portion 9a. A steering shaft 9e is rotatably inserted into the head pipe portion 9a. A front wheel 11 is rotatably supported by the bottom end of the steering shaft 9e. On the other hand, a handle 12 is attached to the top end of the steering shaft 9e.

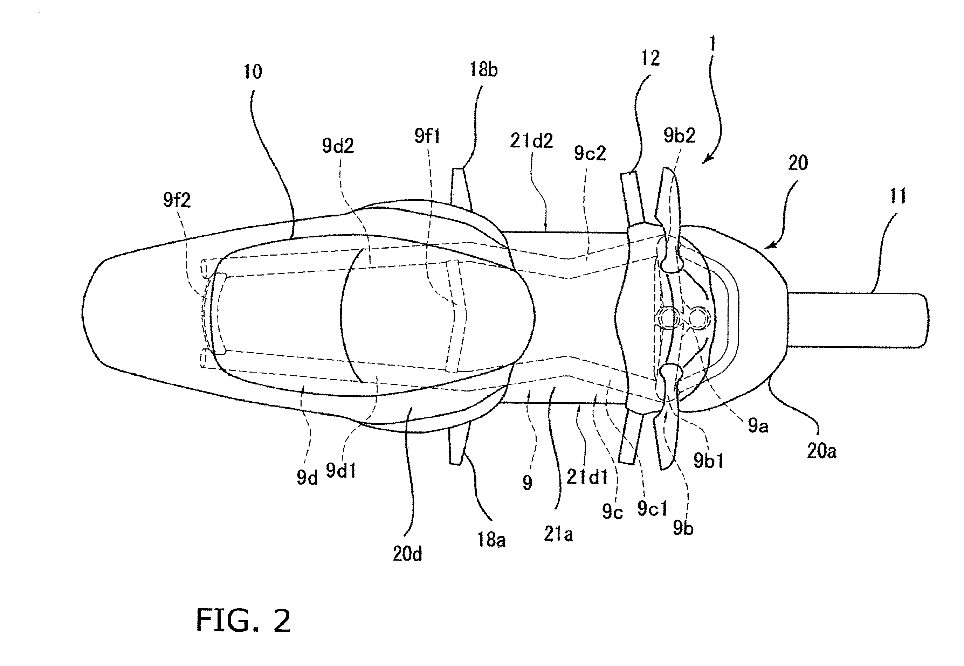

A down frame portion 9b is connected to the head pipe portion 9a. The down frame portion 9b is extended downwards from the head pipe portion 9a. A bottom frame portion 9c is connected to the bottom end of the down frame portion 9b. The bottom frame portion 9c is roughly horizontally extended rearwards from the bottom end of the down frame portion 9b. A rear frame portion 9d is connected to the rear end of the bottom frame portion 9c. The rear frame portion 9d is extended rearwards and obliquely upwards from the rear end of the bottom frame portion 9c. More specifically, the down frame portion 9b includes a right down frame portion 9b1 and a left down frame portion 9b2, as illustrated in FIG. 2. The bottom frame portion 9c includes a right bottom frame portion 9c1 and a left bottom frame portion 9c2. The rear frame portion 9d includes a right rear frame portion 9d1 and a left rear frame portion 9d2. Further, the right and left rear frame portions 9d1 and 9d2 are coupled by coupling frame portions 9f1 and 9f2.

The seat 10 is attached to the vehicle body frame 9. The seat 10 is disposed over the rear frame portion 9d. As illustrated in FIG. 2, a right tandem foot rest 18a and a left tandem foot rest 18b are disposed below the seat 10 as rear foot rests. The tandem foot rests 18a and 18b are disposed transversely outwards of a side cover 20d to be described.

Further, an engine 15 of a unit swing type is disposed under the seat 10, as illustrated in FIG. 1. The engine 15 is pivotably supported by the vehicle body frame 9. Specifically, the engine 15 is pivotably supported by the rear frame portion 9d. A pivot shaft 8 is attached to the vehicle body frame 9. A suspension portion 15h of the engine 15 is pivotably attached to the pivot shaft 8.

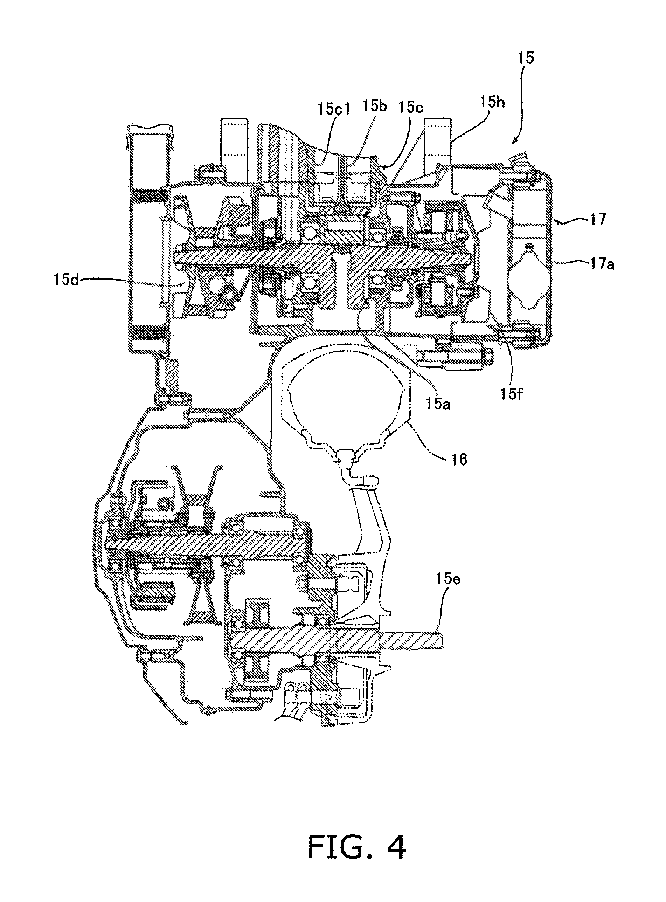

FIG. 4 is a schematic cross-sectional view illustrating a portion of the engine 15. As illustrated in FIG. 4, the engine 15 includes a crankshaft 15a. The crankshaft 15a is transversely extended. In other words, the axis of the crankshaft 15a is arranged in parallel to the transverse direction. A piston (not illustrated in the figures) is connected to the crankshaft 15a through a connecting rod (i.e., conrod) 15b. The piston is disposed within a cylindrical-shaped cylinder 15c1 formed in a cylinder body 15c.

The left end of the crankshaft 15a is connected to a transmission 15d. Rotations of the crankshaft 15a are transmitted to an output shaft 15e through the transmission 15d. A rear wheel 16 attached to the output shaft 15e is thereby rotated.

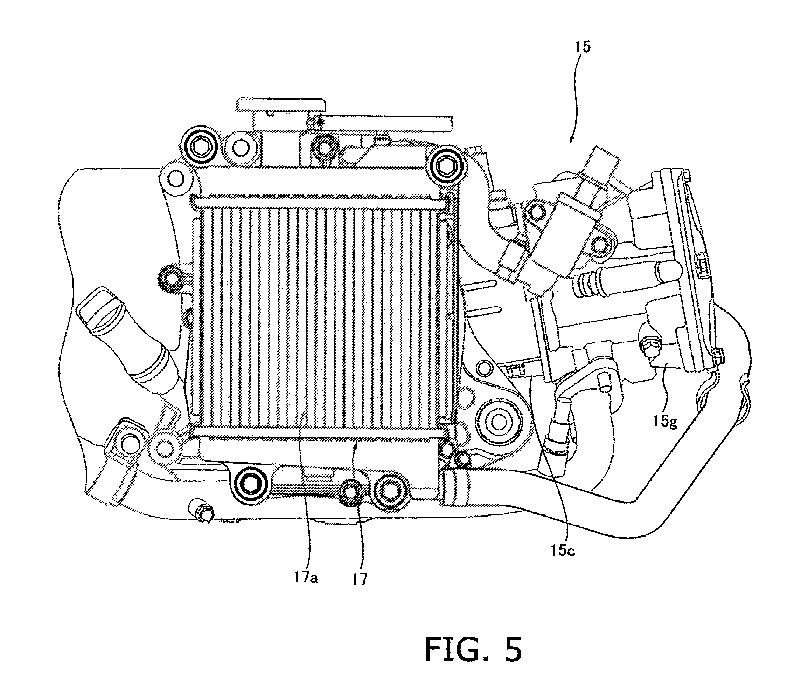

On the other hand, a radiator 17 is disposed transversely outwards of the crankshaft 15a, as illustrated in FIGS. 4 and 5. Specifically, the radiator 17 is disposed rightwards of the crankshaft 15a. The radiator 17 is a device configured to cool down the coolant for cooling down elements illustrated in FIG. 5 such as the cylinder body 15c and a cylinder head 15g. For example, water may be used as the coolant.

The radiator 17 includes a wind receiver surface 17a for receiving the airflow. The radiator 17 is disposed while the wind receiver surface 17a is oriented transversely outwards. The normal line of the wind receiver surface 17a is thereby oriented transversely outwards. In other words, the radiator 17 is disposed along a longitudinal (back and forth) direction of the vehicle. In the present exemplary embodiment, the normal line of the wind receiver surface 17a is arranged in parallel to the transverse direction.

It should be noted the expression "the wind receiver surface 17a is oriented transversely outwards" refers to a condition that an angle of 45 degrees or less is formed between the normal line of the wind receiver surface 17a and the transversely outward direction.

In the present exemplary embodiment, airflow flowing from the right to the left of the radiator 17 is generated by rotations of a radiator fan 15f disposed on the right end of the crankshaft 15a. The airflow cools down the radiator 17 and the coolant within the radiator 17.

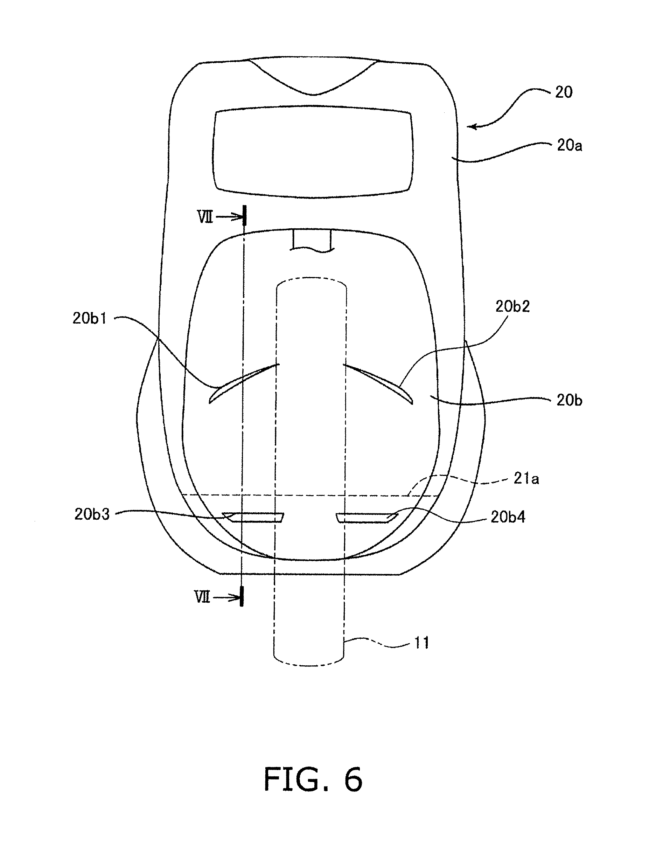

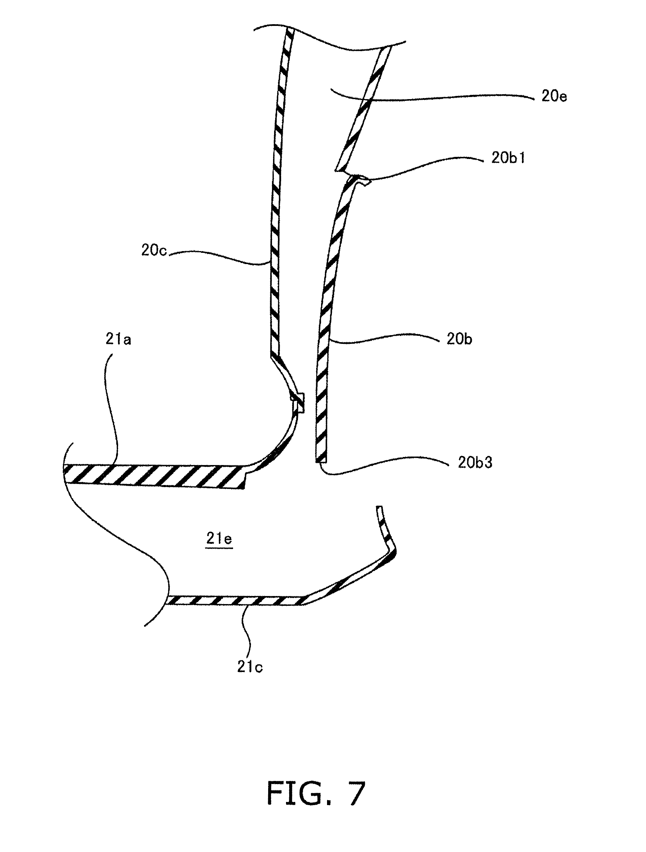

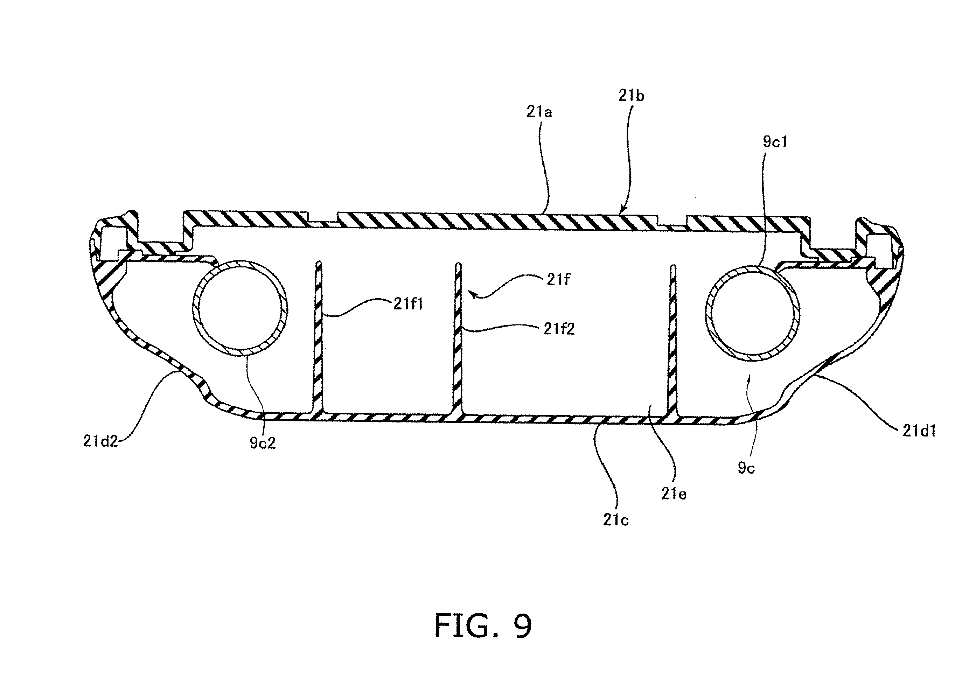

As illustrated in FIG. 1, the vehicle body frame 9 and the engine 15 are covered with a vehicle body cover 20. The vehicle body cover 20 includes a front cover 20a, an inner panel 20b illustrated in FIG. 6, a leg shield 20c illustrated in FIG. 1, the side cover 20d, a foot rest 21 a, a right lower cover 21 d1 illustrated in FIG. 9, a left lower cover 21 d2 and a bottom cover 21 c. The front cover 20a covers the head pipe portion 9a from its front side (see FIG. 3) and partially covers the front portion of the vehicle from its lateral sides. As illustrated in FIGS. 6 and 7, the inner panel 20b is disposed forwards of the lower portion of the front cover 20a. On the other hand, the leg shield 20c is disposed rearwards of the front cover 20a.

As illustrated in FIG. 1, the side cover 20d is disposed under the seat 10. The side cover 20d covers the engine 15 and the radiator 17 from their front sides and at least partially covers the front portions of the engine 15 and the radiator 17 from their transversely outward sides. In the present exemplary embodiment, the side cover 20d partially covers the front portions of the engine 15 and the radiator 17.

The foot rest 21 a is disposed between the leg shield 20c and the side cover 20d in the longitudinal direction of the vehicle. The foot rest 21a is disposed forwards of the engine 15 and the radiator 17. The foot rest 21a is disposed over the bottom frame portion 9c. The foot rest 21 a is a portion that a rider puts his/her feet thereon during travelling of the vehicle. As illustrated in FIGS. 2 and 9, the foot rest 21 a has a flat shape extended from one end thereof to the other end thereof in the transverse direction of the vehicle.

The expression "the foot rest 21a has a flat shape" herein refers to a condition that the foot rest 21a does not include a convex portion for forming a tunnel portion in the transverse center thereof. The expression "the foot rest 21a has a flat shape" also refers to a condition that the foot rest is flat to some extent for allowing a rider to put his/her feet on any portion thereof. In other words, the foot rest 21 a may include, for instance, convexo-concaves for an anti-slip purpose or the like.

As illustrated in FIG. 9, the lower covers 21d1 and 21d2 are disposed under the foot rest 21a. The lower covers 21d1 and 21d2 at least partially cover the bottom frame portion 9c from its transversely outward side. Specifically, the right lower cover 21d1 covers the bottom frame portion 9c from its right side. The left lower cover 21d2 covers the bottom frame portion 9c from its left side. The bottom cover 21c is disposed below the foot rest 21a and the lower covers 21d1 and 21d2. The bottom cover 21c is disposed under the bottom frame portion 9c and covers the bottom frame portion 9c from its bottom side. In the present exemplary embodiment, the right and left lower covers 21d1 and 21d2 and the bottom cover 21c are integrally formed as a single component. However, these covers may be formed as separate components.

A wind guide path 21 e is formed by the foot rest 21a, the bottom cover 21 c and the lower covers 21d1 and 21d2. In other words, the wind guide path 21e is formed under the foot rest 21a and between the lower covers 21d1 and 21d2 in the transverse direction. As hereinafter explained in detail, the wind guide path is a path for directing the flowing air from front to a portion of the space positioned inwards of the side cover 20d, i.e., a portion where the radiator 17 is disposed.

As illustrated in FIG. 7, the front end of the wind guide path 21e continues to a space 20e produced between the inner panel 20b and the leg shield 20c. As illustrated in FIG. 6, the inner panel 20b includes two upper openings (hereinafter referred to as "a first upper opening 20b1" and "a second upper opening 20b2") and two lower openings (hereinafter referred to as "a first lower opening 20b3" and "a second lower opening 20b4").

The first and second upper openings 20b1 and 20b2 are disposed transversely away from each other. The front wheel 11 is disposed to be overlapped with a portion of the inner panel 20b positioned between the first and second upper openings 20b1 and 20b2 in a front view. More specifically, the front wheel 11 is overlapped with the transversely inward end of the first upper opening 20b1 and the transversely inward end of the second upper opening 20b2 in the front view. On the other hand, the front wheel 11 is not overlapped with the other portion of the first upper opening 20b1 and the other portion of the second upper opening 20b2 in the front view. In the front view, the portions of the first and second upper openings 20b1 and 20b2 not overlapped with the front wheel 11 have an area greater than that of the portions of the first and second upper openings 20b1 and 20b2 overlapped with the front wheel 11. Further, the first and second upper openings 20b1 and 20b2 are positioned higher than the foot rest 21 a.

The first and second lower openings 20b3 and 20b4 are disposed transversely away from each other. The front wheel 11 is disposed to be overlapped with a portion of the inner panel 20b positioned between the first and second lower openings 20b3 and 20b4 in a front view. More specifically, the front wheel 11 is overlapped with the transversely inward end of the first lower opening 20b3 and the transversely inward end of the second lower opening 20b4 in the front view. On the other hand, the front wheel 11 is not overlapped with the other portion of the first lower opening 20b3 and the other portion of the second lower opening 20b4 in the front view. In the front view, the portions of the first and second lower openings 20b3 and 20b4 not overlapped with the front wheel 11 have an area greater than that of the portions of the first and second lower openings 20b3 and 20b4 overlapped with the front wheel 11. Further, each of the first and second lower openings 20b3 and 20b4 includes a portion positioned lower than the foot rest 21a. In the present exemplary embodiment, the first and second lower openings 20b3 and 20b4 are entirely positioned lower than the foot rest 21 a. It should be noted that only a portion of the first and second lower openings 20b3 and 20b4 may be positioned lower than the foot rest 21a.

The space 20e positioned rearwards of the inner panel 20b is communicated with the space positioned forwards of the inner panel 20b through the aforementioned upper openings 20b1 and 20b2 and the aforementioned lower openings 20b3 and 20b4. Therefore, the wind guide path 21e is communicated with the space positioned forwards of the inner panel 20b through the space 20e, the upper openings 20b1 and 20b2 and the lower openings 20b3 and 20b4.

On the other hand, the rear end of the wind guide path 21e continues to the space positioned inwards of the side cover 20d, i.e., the space for disposing the engine 15 and the radiator 17. Therefore, the airflow is guided to the space positioned inwards of the side cover 20d through the upper openings 20b1 and 20b2, the lower openings 20b3 and 20b4, the space 20e and the wind guide path 21e. Consequently, the airflow is supplied to the engine 15 and the radiator 17.

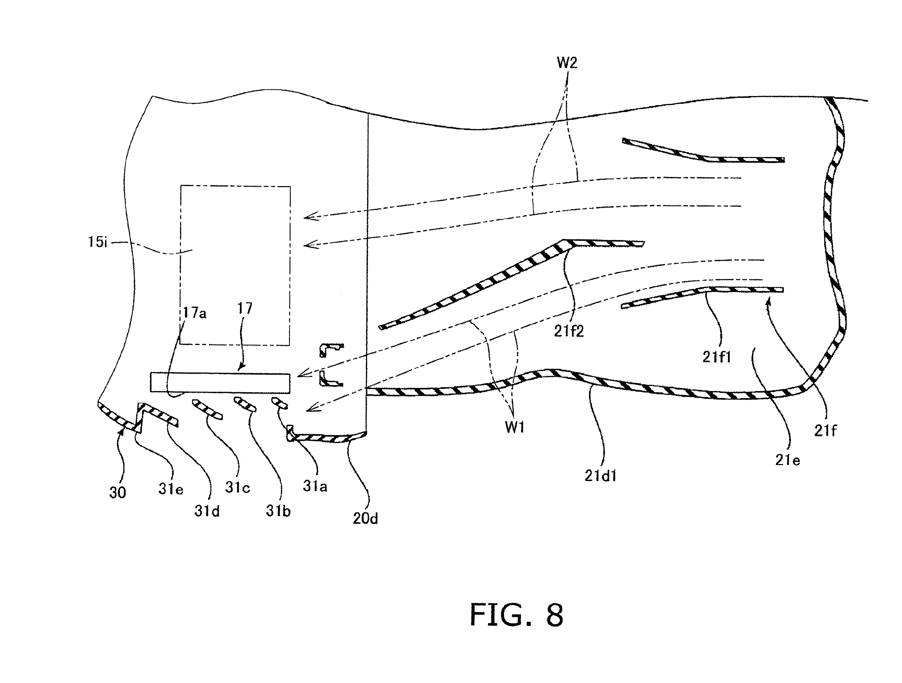

As illustrated in FIGS. 8 and 9, the wind guide path 21e includes a wall member 21f as an intra-path member. When airflows into a portion of the wind guide path 21e positioned transversely inwards of the wind receiver surface 17a, the wall member 21f guides the airflow to the radiator 17.

The wall member 21f is extended upwards from the bottom cover 21c. As illustrated in FIG. 8, the wall member 21f is also extended rearwards. Specifically, the wall member 21f is slanted while the rear portion thereof is positioned transversely outwards of the front portion thereof.

Specifically, the wall member 21f includes a first wall portion 21f1 and a second wall portion 21f2. The first and second wall portions 21f1 and 21f2 are respectively extended rearwards and transversely outwards from positions transversely inward of the wind receiver surface 17a. In other words, the front ends of the first and second wall portions 21f1 and 21f2 are respectively positioned transversely inwards of the wind receiver surface 17a. The rear end of the first wall portion 21f1 is positioned transversely outwards of the front end thereof, whereas the rear end of the second wall portion 21f2 is positioned transversely outwards of the front end thereof. When air passes through the wind guide path 21e, the first and second wall portions 21f1 and 21f2 efficiently guides the airflow to the radiator 17 (see Arrows W1 in FIG. 8). By contrast, the air passing through the wind guide path 21e is partially guided to an oil pan 15i of the engine 15 (see Arrows W2 in FIG. 8) without being guided to the radiator 17.

It should be noted that the wall member 21f is extended perpendicular to the bottom cover 21c in the present exemplary embodiment. However, the wall member 21f may be extended obliquely upwards from the bottom cover 21c.

As illustrated in FIGS. 1 and 8, a wind guide member 30 is disposed transversely outwards of the radiator 17. Specifically, the wind guide member 30 is positioned transversely outwards of the radiator 17 while being positioned transversely inwards of the rear end of the side cover 20d as illustrated in FIG. 8. In other words, the wind guide member 30 is disposed transversely outwards of the radiator 17 while being disposed in a space positioned inwards of the side cover 20d.

The wind guide member 30 is a member for guiding the air, flowing into the space positioned inwards of the side cover 20d through the wind guide path 21e, to the radiator 17. The air, passing through the wind guide path 21e, is partially supplied to the radiator 17 even if the wind guide member 30 is not herein provided. Therefore, the wind guide member 30 is not an essential member in the present invention.

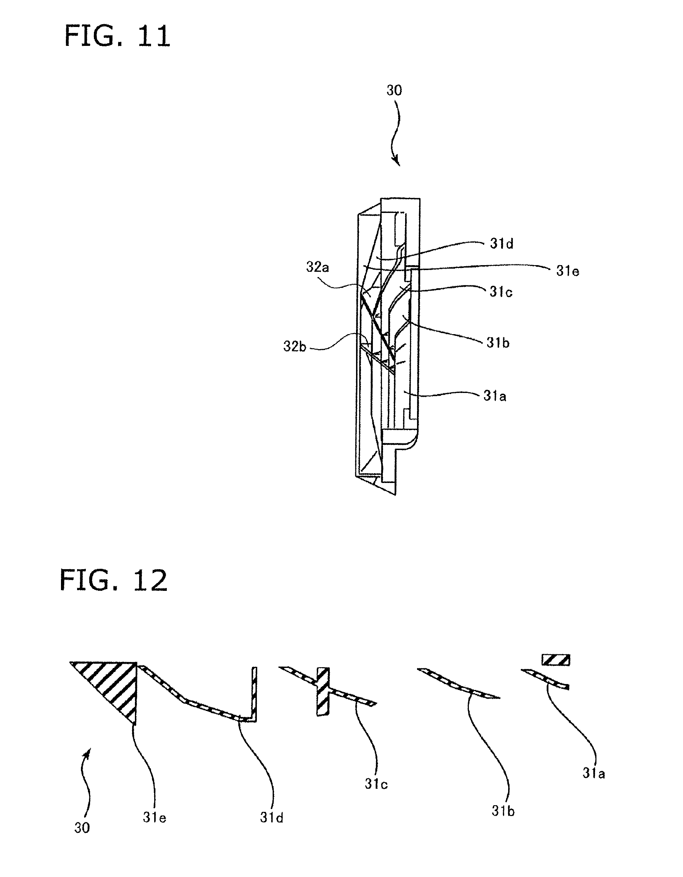

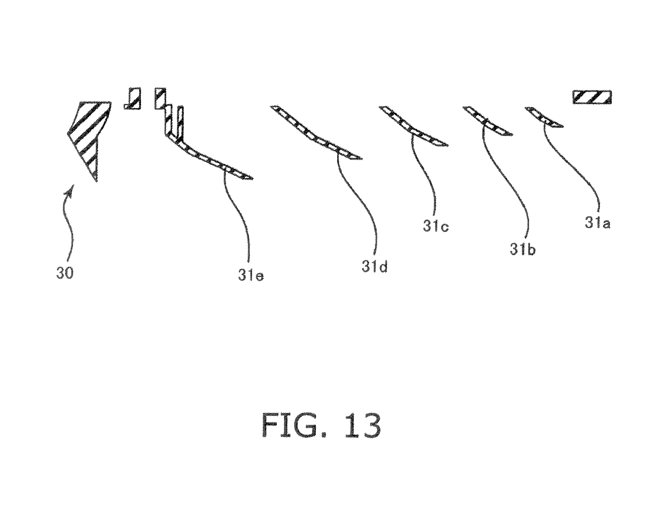

The structure of the wind guide member 30 will be hereinafter explained in detail with reference to mainly FIG. 8 and FIGS. 10 to 13. The wind guide member 30 includes a plurality of fins 31a to 31e. As illustrated in FIG. 8, the first to fifth fins 31a to 31e are disposed transversely outwards of the radiator 17. Further, the first to fifth fins 31a to 31e are disposed transversely inwards of the transversely outward end of the side cover 20d. The first to fifth fins 31 a to 31 e are respectively extended forwards and transversely outwards. In other words, each of the first to fifth fins 31 a to 31 e is slanted while the rear portion thereof is positioned closer to the radiator 17 than the front portion thereof is.

More specifically, the first to fifth fins 31a to 31e are aligned along the longitudinal direction of the vehicle, as illustrated in FIGS. 8, 10, 12 and 13. Further, as illustrated in FIGS. 7 to 12, an arbitrary one of the first to fifth fins 31 a to 31 e includes a transversely outward end positioned transversely outwards of that of the other/others of the first to fifth fins 31a to 31e disposed forwards of the arbitrary one.

Specifically, the first fin 31 a disposed foremost includes a transversely outward end positioned most transversely inwards. The second fin 31 b, positioned adjacently rearwards of the first fin 31a, includes a transversely outward end positioned transversely outwards of that of the first fin 31 a. The third fin 31 c, positioned adjacently rearwards of the second fin 31b, includes a transversely outward end positioned transversely outwards of that of the second fin 31b. The fourth fin 31d, positioned adjacently rearwards of the third fin 31c, includes a transversely outward end positioned transversely outwards of that of the third fin 31c. The fifth fin 31e, positioned adjacently rearwards of the fourth fin 31d, includes a transversely outward end positioned transversely outwards of that of the fourth fin 31d.

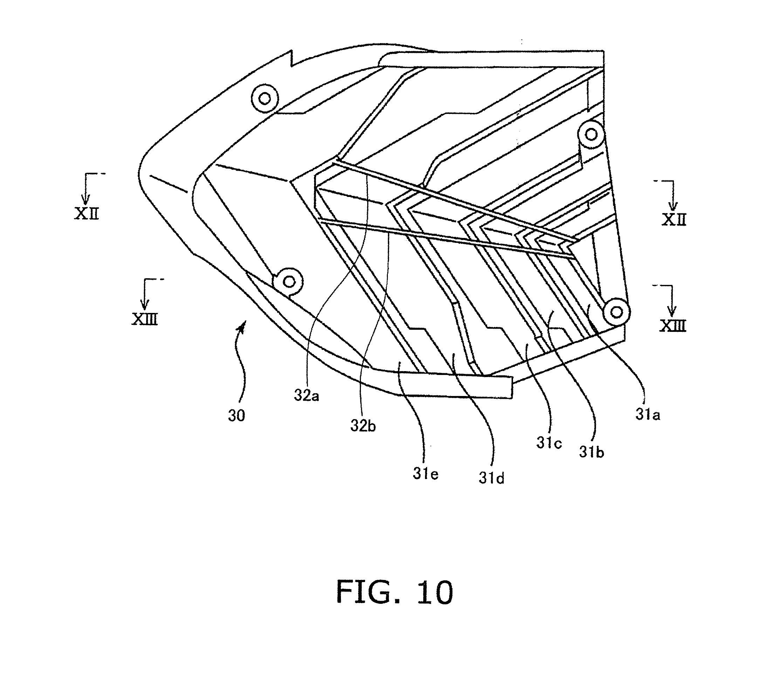

It should be noted that each of the first to fifth fins 31a to 31e has a bent shape so that an intermediate portion thereof in the vertical (up and down) direction is positioned rearwards of the top and bottom ends thereof, as illustrated in FIG. 10. Each of the first to fifth fins 31a to 31e has a linearly bent shape for forming an acute angle in the intermediate portion thereof. Further, the first to fifth fins 31 a to 31 e are respectively coupled by means of coupling portions 32a and 32b. The coupling portions 32a and 32b are disposed roughly along the longitudinal direction for intersecting with the first to fifth fins 31a to 31e.

As illustrated in FIG. 1, the tandem foot rests 18a and 18b are disposed in the motorcycle 1 of the present exemplary embodiment. The side cover 20d is thereby required to be disposed inwards of the tandem foot rests 18a and 18b. Therefore, the side cover 20d is largely extended rearwards in the present exemplary embodiment. Consequently, the side cover 20d partially covers the front portion of the radiator 17 from its transversely outward side. In other words, the wind receiver surface 17a of the radiator 17 has a small area exposed without being covered with the side cover 20d. Therefore, if the air flowing transversely outwards of the side cover 20d is supplied to the radiator 17 as configured in the well-known motorcycles, an efficiency of supplying the airflow to the radiator 17 is reduced and an efficiency of cooling down the coolant in the radiator 17 is accordingly reduced.

By contrast, the motorcycle 1 of the present exemplary embodiment includes the wind guide path 21e in the inside of the foot rest 21a, as illustrated in FIG. 8. The airflow from front is supplied to the space within the side cover 20d through the wind guide path 21 e. Consequently, the airflow from front is efficiently supplied to the radiator 17. In other words, it is possible to enhance an efficiency of cooling down the coolant in the radiator 17.

It should be noted that the normal motorcycles generally use the space under the foot rest as a space for disposing electronic components and wirings. The purpose of the above is to compactly produce the motorcycles by effectively utilizing the dead space produced under the foot rest because the accommodation space is normally quite limited in the motorcycles.

Further, it is generally considered to be preferable to substantially close the space under the foot rest for preventing mud and water from entering there.

It is a distinct feature of the motorcycle 1 of the present exemplary embodiment that the space under the foot rest 21 a is used as the wind guide path 21 e purposely without closing the space and without disposing electronic components and the like in the space. As described above, it is possible to achieve a high efficiency of supplying the airflow to the radiator 17 by adopting the above structure.

Further, the exposed area of the radiator is recued in the well-known motorcycles when the side cover partially covers the radiator from its transversely outward side as described above. This reduces an efficiency of supplying the airflow to the radiator 17. In the motorcycle 1 of the present exemplary embodiment, however, the airflow is guided to the space positioned inwards of the side cover 20d through the wind guide path 21e. Therefore, it is possible to efficiently guide the air, flowing through the space positioned inwards of the side cover 20d, to the radiator 17 with the structure that the side cover 20d partially covers the radiator 17 from its transversely outward side. Consequently, the motorcycle 1 of the present exemplary embodiment enhances an efficiency of supplying the airflow to the radiator 17 with the structure that the side cover 20d partially covers the radiator 17 from its transversely outward side.

Further in the present exemplary embodiment, the wind guide member 30 is provided for guiding the air flowing through the wind guide path 21 e to the radiator 17. Therefore, it is possible to efficiently supply the rearward airflow to the wind receiver surface 17a of the radiator 17. In the present exemplary embodiment, the wind guide member 30 specifically includes a plurality of fins 31a to 31e and each of the fins 31a to 31e is slanted while the rear portion thereof is positioned transversely closer to the radiator 17 than the front portion thereof is. The fins 31 a to 31 e can change the direction of the air backwardly flowing through the wind guide path 21 e to a direction towards the wind receiver surface 17a of the radiator 17. In other words, it is possible to further effectively enhance an efficiency of supplying the airflow to the radiator 17 by providing the fins 31 a to 31 e.

Further in the present exemplary embodiment, an arbitrary one of the fins 31 a to 31 e includes a transversely outward end positioned transversely outwards of that of the other/others of the fins 31a to 31e disposed forwards of the arbitrary one. The airflow accordingly hits all of the first to fifth fins 31a to 31e. Therefore, it is possible to supply the airflow to the entire wind receiver surface 17a of the radiator 17. In other words, it is possible to further effectively enhance an efficiency of supplying the airflow to the radiator 17.

It is herein possible to assume the structure that the side cover 20d entirely covers the wind receiver surface 17a of the radiator 17 from its transversely outward side without providing the wind guide member 30. Even if the structure is adopted, it is possible to efficiently supply the airflow to the radiator 17.

In this case, however, the side cover 20d blocks heat discharged from the radiator 17 when the motorcycle 1 stops or travels at a low speed. Therefore, an efficiency of cooling down the coolant in the radiator 17 is reduced when the motorcycle 1 stops or travels at a low speed.

In the present exemplary embodiment, by contrast, the other portion of the radiator 17, excluding a portion of the front portion thereof, is not covered with the side cover 20d from its transversely outward side. Further, the openings are formed among the fins 31a to 31e of the wind guide member 30. In the motorcycle 1 of the present exemplary embodiment, heat is thereby efficiently discharged from the radiator 17 when the motorcycle 1 stops or travels at a low speed. Therefore, the motorcycle 1 of the present exemplary embodiment can achieve a high efficiency of cooling down the coolant in the radiator 17 not only during a high speed travelling with abundant airflow but also during a low speed travelling or stoppage.

Further in the present exemplary embodiment, the wall portions 21f1 and 21f2 are disposed within the wind guide path 21e. Each of the wall portions 21f1 and 21f2 is extended rearwards and transversely outwards from a position transversely inwards of the wind receiver surface 17a. Therefore, it is also possible to guide the air, flowing into a portion positioned transversely inwards of the wind receiver surface 17a within the wind guide path 21e, to the radiator 17 by means of the wall portions 21f1 and 21f2. In other words, it is possible to guide the airflow to the radiator 17 as much as possible. Consequently, it is possible to enhance an efficiency of cooling down the coolant in the radiator 17.

It should be noted that the wall portions 21f1 and 21f2 may be integrally formed with the bottom cover 21c and the like. Alternatively, the wall portions 21f1 and 21f2 may be formed as individual members separated from the other members.

Further in the present exemplary embodiment, the inner panel 20b includes the upper openings 20b1 and 20b2 and the lower openings 20b3 and 20b4. Therefore, it is possible to efficiently guide the airflow to the wind guide path 21e through the upper openings 20b1 and 20b2 and the lower openings 20b3 and 20b4.

Especially, each of the lower openings 20b3 and 20b4 includes a portion positioned lower than the foot rest 21a. Therefore, it is possible to efficiently guide the airflow to the wind guide path 21e positioned below the foot rest 21 a through the lower openings 20b3 and 20b4.

Further, the upper openings 20b1 and 20b2 are disposed transversely away from each other. Likewise, the lower openings 20b3 and 20b4 are disposed transversely away from each other. Therefore, most portion of the upper openings 20b1 and 20b2 and the lower openings 20b3 and 20b4 are not overlapped with the front wheel 11 in a front view. The airflow can thereby efficiently flow into the upper openings 20b1 and 20b2 and the lower openings 20b3 and 20b4 without being blocked by the front wheel 11.

An exemplary embodiment of the present invention has been described above. However, the present invention is not limited to the aforementioned exemplary embodiment and a variety of changes can be made for the present invention without departing from the scope of the present invention as defined in the appended claims.

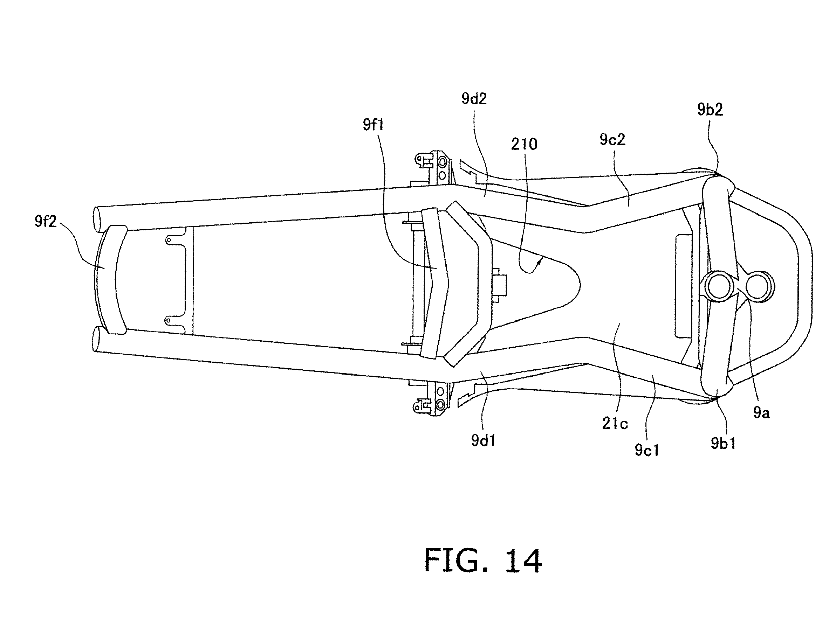

For example, the bottom cover 21c may not entirely cover the bottom side of the wind guide path 21e. As illustrated in FIG. 14, the bottom cover 21c may include a recessed portion 210. The recessed portion 210 has a shape recessed forwards from the rear end of the bottom cover 21c. Alternatively, either the longitudinal length or the transverse length of the bottom cover 21 c may be shorter than that of the wind guide path 21e. Further, the bottom cover 21c may not be provided to the motorcycle. Specifically, the wind guide path 21e is not particularly limited as long as it is at least produced by the lower cover and the foot rest.

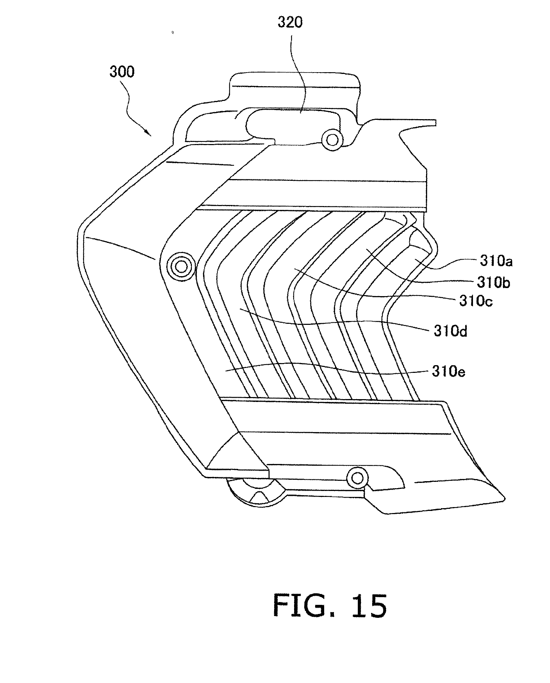

The shape of the wind guide member is not limited to the shape of the aforementioned wind guide member 30. For example, the motorcycle 1 may be provided with a wind guide member 300 illustrated in FIG. 15. The wind guide member 300 includes first to fifth fins 310a to 310e. The first to fifth fins 310a to 310e are not coupled by the aforementioned coupling portions 32a and 32b (see FIG. 10). Further, each of the first to fifth fins 310a to 310e includes an intermediate portion having a curved shape and is thereby entirely curved. Further, the wind guide member 300 includes an aperture 320 in the upper portion thereof for avoiding interference with a portion of the radiator 17.

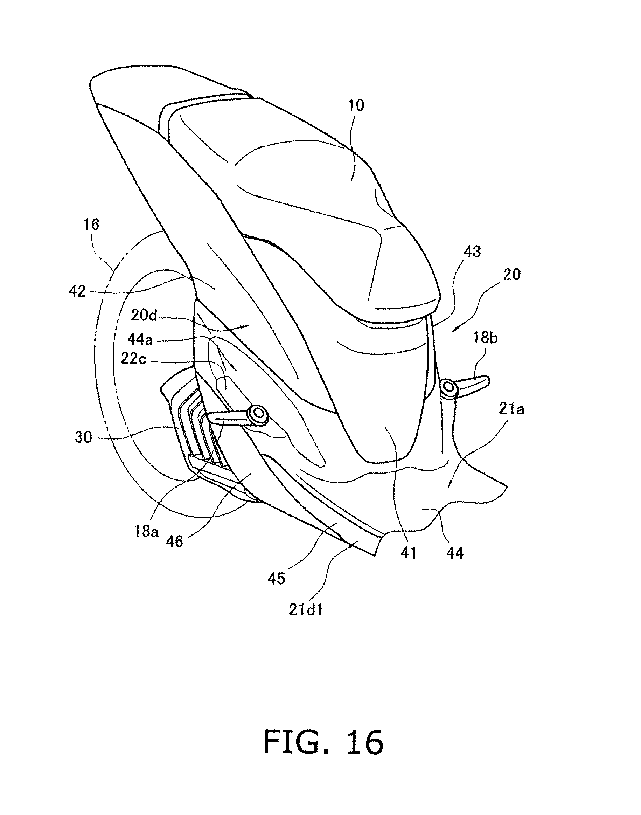

The aforementioned portions forming the vehicle body cover 20 may be formed as a plurality of components. For example, the vehicle body cover 20 may include first to sixth cover components 41 to 46, as illustrated in FIG. 16. The cover components are separately produced components. The first cover component 41 is positioned under the front end of the seat 10. Further, the first cover component 41 is positioned under the both right and left sides of the front portion of the seat 10. The first cover component 41 forms the upper portion of the front surface of the aforementioned side cover 20d. The second cover component 42 is positioned rearwards of the first cover component 41 while being positioned under the rear portion of the seat 10. The second cover component 42 forms the upper portion of the right surface of the aforementioned side cover 20d. The third cover component 43 is disposed roughly bilaterally symmetric to the second cover component 42. The third cover component 43 forms the upper portion of the left surface of the aforementioned side cover 20d. The fourth cover component 44 is positioned under the first cover component 41, the second cover component 42 and the third cover component 43. The fourth cover component 44 forms the foot board 21a and a portion of the both right and left surfaces of the side cover 20d. Specifically, the fourth cover component 44 includes a recessed portion 44a on the right surface thereof, and the recessed portion 44a is recessed transversely inwards. The bottom surface of the recessed portion 44a forms a stepped portion 22c where the aforementioned tandem foot rest 18a is disposed. The left surface of the fourth cover component 44 has a shape roughly bilaterally symmetric to the right surface thereof. The fifth cover component 45 is positioned under the fourth cover component 44. The fifth cover component 45 forms a portion of the aforementioned lower cover 21d1. The sixth cover component 46 is positioned under the fourth cover component 44 while being positioned rearwards of the fifth cover component 45. The sixth cover component 46 forms a portion of the aforementioned lower cover 21d1 and the lower portion of the right surface of the side cover 20d. It should be noted that a seventh cover component is disposed bilaterally symmetric to the fifth cover component 45 while an eighth cover component is disposed bilaterally symmetric to the sixth cover component 46, although these components are not illustrated in the figures. The seventh cover component forms the lower cover 21 d2 while the eighth cover component forms the lower portion of the left surface of the side cover 20d. It should be noted that an aspect of dividing the vehicle body cover 20 into a plurality of components may not be limited to the above. Further, a portion or all of the aforementioned first to sixth cover components 41 to 46 and the aforementioned seventh and eighth cover components may be integrally formed.

### INDUSTRIAL APPLICABILITY

According to the present invention, it is possible to enhance an efficiency of supplying the airflow to a side radiator in a motorcycle.

### REFERENCE SIGNS LIST

- 1: Motorcycle
- 9: Vehicle body frame
- 15: Engine
- 15a: Crankshaft
- 17: Radiator
- 18a, 18b: Tandem foot rest
- 20b: Inner panel
- 20b1, 20b2: Upper opening
- 20b3, 20b3: Lower opening
- 20d: Side cover
- 21a: Foot rest
- 21d1: Left bottom cover
- 21d2: Right bottom cover
- 21e: Wind guide path
- 21f: Wall member
- 30: Wind guide member
- 31a: First fin
- 31b: Second fin

## Claims

1. A motorcycle, comprising:
a vehicle body frame (9) including: a head pipe portion (9a); a down frame portion (9b) extended downwards from the head pipe portion (9a); a bottom frame portion (9c) extended rearwards from a bottom end of the down frame portion (9b); and a rear frame portion (9d) extended upwards from a rear end of the bottom frame portion (9c);
a foot rest (21 a) disposed over the bottom frame portion (9c), the foot rest (21 a) including a transversely flat shape;
an engine (15) including a transversely extended crankshaft (15a), the engine (15) being pivotably supported by the rear frame portion (9d);
a radiator (17) disposed transversely outwards of the crankshaft (15a);
a side cover (20d);
a left lower cover (21 d1) at least partially covering the bottom frame portion (9c) from a left side of the bottom frame portion (9c); and
a right lower cover (21d2) at least partially covering the bottom frame portion (9c) from a right side of the bottom frame portion (9c),
wherein a wind guide path (21e) is disposed transversely between the right and left lower covers (21d1, 21d2) and under the foot rest (21a),
**characterized in that** the radiator (17) is covering the crankshaft (15a) from a transversely outward side, the side cover (20d) is at least partially covering the radiator (17) from a transversely outward side of the radiator (17), and the wind guide path (21e) is adapted for guiding an air to a space between the side cover (20d) and the radiator (17).

2. A motorcycle according to claim 1, **characterized by**
a wind guide member (30) adapted for guiding the air flowing from the wind guide path (21 e) to the radiator (17),
wherein the wind guide member (30) is positioned transversely outwards of the radiator (17), and the wind guide member (30) is positioned transversely inwards of the side cover (20d).

3. A motorcycle according to claim 2, **characterized in that** the wind guide member (30) includes a plurality of fins (31a-e) wherein a second (31b) of said fins is disposed rearwards of a first (31a) of said fins,
each of the first and second (31 a, 31 b) of said fins is slanted for positioning a rear portion thereof transversely closer to the radiator (17) than a front portion thereof is to the radiator (17), and
a transversely outward end of the second (31 b) of said fins is positioned transversely outwards of a transversely outward end of the first (31 a) of said fins.

4. A motorcycle according to claim 3, **characterized in that** the plurality of fins (31 a-e) includes the first fin (31a) disposed foremost and including the transversely outward end positioned most transversely inwards, the second fin (31 b), positioned adjacently rearwards of the first fin (31 a), and including the transversely outward end positioned transversely outwards of that of the first fin (31 a), a third fin (31 c), positioned adjacently rearwards of the second fin (31 b), and including a transversely outward end positioned transversely outwards of that of the second fin (31 b), a fourth fin (31 d), positioned adjacently rearwards of the third fin (31 c), and including a transversely outward end positioned transversely outwards of that of the third fin (31 c), a fifth fin (31 e), positioned adjacently rearwards of the fourth fin (31 d), and including a transversely outward end positioned transversely outwards of that of the fourth fin (31 d).

5. A motorcycle according to at least one of the claims 1 to 4, **characterized by** an intra-path member (21f) disposed in the wind guide path (21e) and adapted for guiding air flowed into a portion of the wind guide path (21e) positioned transversely inwards of the radiator (17), to the radiator (17).

6. A motorcycle according to claim 5, **characterized by**
a bottom cover (21c) covering the bottom frame portion (9c) from a bottom side of the bottom frame portion (9c), wherein the intra-path member (21f) is a wall member (21f1, 21 f2) extended upwards from the bottom cover (21 c), and
a front end of the wall member (21f1, 21f2) is positioned transversely inwards of the radiator (17) and a rear end of the wall member (21 f1, 21 f2) is positioned transversely outwards of the front end of the wall member (21f1, 21f2).

7. A motorcycle according to claim 6, **characterized in that** the wall member comprises a plurality of wall portions (21 f1, 21f2) disposed within the wind guide path (21 e).

8. A motorcycle according to at least one of the claims 1 to 7, **characterized by** an inner panel (20b) disposed forwards of the foot rest (21 a), wherein the inner panel (20b) includes at least one opening (20b1, 20b2, 20b3, 20b4) communicated with the wind guide path (21e).

9. A motorcycle according to claim 8, **characterized in that** the opening (20b3, 20b4) is at least partially positioned lower than the foot rest (21 a).

10. A motorcycle according to claim 8 or 9, **characterized in that** the inner panel (20b) includes a plurality of openings (20b1, 20b2, 20b3, 20b4) and a first opening (20b1) and a second opening (20b1) are disposed transversely away from each other.

11. A motorcycle according to at least one of the claims 1 to 10, **characterized in that** the engine (15) is disposed rearwards of the foot rest (21 a).

12. A motorcycle according to at least one of the claims 1 to 10, **characterized by** a rear foot rest (18a, 18b) disposed transversely outwards of the side cover (20d).

## Patentansprüche

1. Ein Motorrad mit:
einem Fahrzeug-Körper-Rahmen (9) der beinhaltet: einen Kopf-Rohr-Abschnitt (9a);
einen Unter-Rahmen-Abschnitt (9b), der sich von dem Kopf-Rohr-Abschnitt (9a) nach unten erstreckt; einem Boden-Rahmen-Abschnitt (9c) der sich von einem Boden-Ende des Unter-Rahmen-Abschnitts (9b) nach hinten erstreckt; und einem Rück-Rahmen-Abschnitt (9d) der sich von einem Rück-Ende des Boden-Rahmen-Abschnitts (9c) nach oben erstreckt;
einer Fuß-Ablage (21 a), positioniert über dem Boden-Rahmen-Abschnitt (9c), die Fuß-Ablage (21 a) beinhaltet eine Quer-Flache-Form;
einem Motor (15), der eine quer-erstreckende Kurbelwelle (15a) beinhaltet, der Motor (15) ist durch den Rück-Rahmen-Abschnitt (9d) schwenkbar gelagert;
einem Kühler (17), positioniert quer außerhalb der Kurbelwelle (15a);
einer Seiten-Abdeckung (20d);
einer linken unteren Abdeckung (21d1), die zumindest teilweise den Boden-Rahmen-Abschnitt (9c) von der linken Seite des Boden-Rahmen-Abschnitts (9c) abdeckt; und
einer rechten unteren Abdeckung (21 d2), die zumindest teilweise den Boden-Rahmen-Abschnitt (9c) von einer rechten Seite des Boden-Rahmen-Abschnitts (9c) abdeckt, wobei ein Wind-Führungs-Pfad (21 e) quer zwischen den linken und rechten unteren Abdeckungen (21 d1, 21 d2) und unter der Fuß-Ablage (21 a) positioniert ist,
**dadurch gekennzeichnet, dass** der Kühler (17) die Kurbelwelle von einer Quer-Außen-Seite abdeckt, die Seiten-Abdeckung (20d) zumindest teilweise den Kühler (17) von einer Quer-Außen-Seite des Kühlers (17) abdeckt und der Wind-Führungs-Pfad (21e) zum Führen von Luft zu einem Raum zwischen der Seiten-Abdeckung (20d) und dem Kühler (17) ist ausgebildet.

2. Ein Motorrad gemäß Anspruch 1, **gekennzeichnet durch** ein Wind-Führungs-Element (30), ausgebildet zum Führen von Luft von dem Wind-Führungs-Pfad (21 e) zu dem Kühler (17), wobei das Wind-Führungs-Element (30) quer außerhalb des Kühlers (17) positioniert ist und das Wind-Führungs-Element (30) quer innerhalb von der Seiten-Abdeckung (20d) positioniert ist.

3. Ein Motorrad gemäß Anspruch 2, **dadurch gekennzeichnet, dass** das Wind-Führungs-Element (30) eine Mehrzahl von Flügeln (31a-e) beinhaltet, wobei ein zweiter (31 b) von diesen Flügeln hinter einem ersten (31 a) von diesen Flügeln positioniert ist, jeder von den ersten und zweiten (31 a, 31 b) von diesen Flügeln ist geneigt, um einen hinteren Abschnitt derselben quer näher zu dem Kühler (17) als einen vorderen Abschnitt derselben zu dem Kühler (17) zu positionieren, und
ein Quer-Außen-Ende des zweiten (31 b) von diesen Flügeln ist quer außen von einem Quer-Außen-Ende des ersten (31 a) von diesen Flügeln positioniert.

4. Ein Motorrad gemäß Anspruch 3, **dadurch gekennzeichnet, dass** eine Mehrzahl der Flügel (31a-e) den ersten Flügel (31 a), positioniert am weitesten vorne, und das Quer-Außen-Ende, positioniert weiter innen, beinhaltet, den zweite Flügel (31 b), positioniert benachbart hinter dem ersten Flügel (31 a), und das Quer-Außen-Ende positioniert quer außen von dem des ersten Flügel (31 a), beinhaltet, einen dritten Flügel (31 c), positioniert benachbart hinter dem zweiten Flügel (31 b), und ein Quer-Außen-Ende positioniert positioniert quer außen von dem des zweiten Flügels (31 b), beinhaltet, einen vierten Flügel (31 d), positioniert benachbart hinter dem dritten Flügel (31 c) und ein Quer-Außen-Ende positioniert quer außen von dem des dritten Flügels (31 c), beinhaltet, einen fünfter Flügel (31 e), positioniert benachbart hinter dem vierten Flügel (31d) und ein Quer-Außen-Ende positioniert quer außen von dem des vierten Flügels (31 d) beinhaltet.

5. Ein Motorrad gemäß zumindest einem der Ansprüche 1 bis 4, **gekennzeichnet durch** ein Innen-Pfad-Element (21f), angeordnet in dem Wind-Führungs-Pfad (21e) und ausgebildet zum Führen von Luft, die in einen Abschnitt des Wind-Führungs-Pfads (21e) einströmt, positioniert quer innerhalb von dem Kühler (17) zu dem Kühler (17).

6. Ein Motorrad gemäß Anspruch 5, **gekennzeichnet durch** eine Boden-Abdeckung (21 c), welche den Boden-Rahmen-Abschnitt (9c) von einer Boden-Seite des Boden-Rahmen-Abschnitts (9c) abdeckt, wobei das Innen-Pfad-Element (21f) ein WandElement (21f1, 21f2) ist, das sich nach oben von der Boden-Abdeckung (21c) erstreckt, und
ein vorderes Ende des Wand-Elements (21f1, 21f2) ist quer innerhalb des Kühlers (17) positioniert, und ein hinteres Ende des Wand-Elements (21f1, 21f2) ist quer außerhalb des vorderen Endes des Wand-Elements (21f1, 21f2) positioniert.

7. Ein Motorrad gemäß Anspruch 6, **dadurch gekennzeichnet, dass** das WandElement eine Mehrzahl von Wand-Abschnitte (21f1, 21f2) umfasst, die in dem Wind-Führungs-Pfad (21 e) positioniert sind.

8. Ein Motorrad gemäß zumindest einem der Ansprüche 1 bis 7, **gekennzeichnet durch** ein Innen-Paneel (20b), positioniert vor der Fuß-Ablage (21a), wobei das Innen-Paneel (21 b) zumindest eine Öffnung (20b1, 20b2, 20b3, 20b4) beinhaltet, die in Verbindung mit dem Wind-Führungs-Pfad (21 e) ist.

9. Ein Motorrad gemäß Anspruch 8, **dadurch gekennzeichnet, dass** die Öffnung (20b3, 20b4) zumindest teilweise niedriger als die Fuß-Ablage (21 a) positioniert ist.

10. Ein Motorrad gemäß Anspruch 8 oder 9, **dadurch gekennzeichnet, dass** das Innen-Paneel (20b) eine Mehrzahl von Öffnungen (20b1, 20b2, 20b3, 20b4) beinhaltet, und eine erste Öffnung (20b1) und eine zweite Öffnung (20b1) quer voneinander beabstandet positioniert sind.

11. Ein Motorrad gemäß zumindest einem der Ansprüche 1 bis 10, **dadurch gekennzeichnet, dass** der Motor hinter der Fuß-Ablage (21a) positioniert ist.

12. Ein Motorrad gemäß zumindest einem der Ansprüche 1 bis 10, **gekennzeichnet durch** eine hintere Fuß-Ablage (18a, 18b), positioniert quer außerhalb von der Seiten-Abdeckung (20e).

## Revendications

1. Motocyclette, comprenant :
un châssis de véhicule (9) comportant : une partie de tube de tête (9a) ; une partie de châssis descendante (9b) qui s'étend vers le bas depuis la partie de tube de tête (9a) ; une partie de châssis de fond (9c) qui s'étend vers l'arrière depuis une extrémité de fond de la partie de châssis descendante (9b) ; une partie de châssis arrière (9d) qui s'étend vers le haut depuis une extrémité arrière de la partie de châssis de fond (9c) ; un repose-pied (21a) agencé par-dessus la partie de châssis de fond (9c), le repose-pied (21a) présentant une forme transversalement plane ;
un moteur (15) comprenant un vilebrequin (15a) qui s'étend transversalement, le moteur (15) étant supporté de manière pivotante par la partie de châssis arrière (9d) ;
un radiateur (17) agencé transversalement vers l'extérieur du vilebrequin (15a) ;
un carénage latéral (20d) ;
un carénage inférieur gauche (21d1) recouvrant au moins partiellement la partie de châssis de fond (9c) depuis un côté gauche de la partie de châssis de fond (9c) ; et
un carénage inférieur droit (21d2) recouvrant au moins partiellement la partie de châssis de fond (9c) depuis un côté droit de la partie de châssis de fond (9c),
dans laquelle un circuit de guidage du vent (21e) est agencé transversalement entre les carénages inférieurs droit et gauche (21d1, 21d2) et sous le repose-pied (21a),
**caractérisée en ce que** le radiateur (17) recouvre le vilebrequin (15a) depuis un côté transversalement externe, le carénage latéral (20d) recouvre au moins partiellement le radiateur (17) depuis un côté transversalement externe du radiateur (17), et le circuit de guidage du vent (21e) est adapté pour guider de l'air vers un espace entre le carénage latéral (20d) et le radiateur (17).

2. Motocyclette selon la revendication 1, **caractérisée par**
un élément de guidage du vent (30) adapté pour guider l'air qui s'écoule depuis le circuit de guidage du vent (21e) vers le radiateur (17),
dans lequel l'élément de guidage du vent (30) est positionné transversalement vers l'extérieur du radiateur (17), et l'élément de guidage du vent (30) est positionné transversalement vers l'intérieur du carénage latéral (20d).

3. Motocyclette selon la revendication 2, **caractérisée en ce que**
l'élément de guidage du vent (30) comprend une pluralité d'ailettes (31a-e) dans laquelle une deuxième ailette (31b) desdites ailettes est agencée à l'arrière d'une première ailette (31a) desdites ailettes, chacune des première et deuxième ailettes (31a, 31b) desdites ailettes est inclinée pour positionner leur partie arrière transversalement plus près du radiateur (17) que leur partie avant par rapport au radiateur (17), et une extrémité transversalement externe de la deuxième ailette (31b) desdites ailettes est positionnée transversalement vers l'extérieur d'une extrémité transversalement externe de la première ailette (31a) desdites ailettes.

4. Motocyclette selon la revendication 3, **caractérisée en ce que**
la pluralité d'ailettes (31a-e) comprend la première ailette (31a) agencée le plus en avant et comprenant l'extrémité transversalement externe positionnée transversalement le plus vers l'intérieur, la deuxième ailette (31b), positionnée de manière adjacente à l'arrière de la première ailette (31a), comprenant l'extrémité transversalement externe positionnée transversalement vers l'extérieur par rapport à celle de la première ailette (31a), une troisième ailette (31c), positionnée de manière adjacente à l'arrière de la deuxième ailette (31b), comprenant une extrémité transversalement externe positionnée transversalement vers l'extérieur par rapport à celle de la deuxième ailette (31b), une quatrième ailette (31d), positionnée de manière adjacente à l'arrière de la troisième ailette (31c), comprenant une extrémité transversalement externe positionnée transversalement vers l'extérieur par rapport à celle de la troisième ailette (31c), une cinquième ailette (31e), positionnée de manière adjacente à l'arrière de la quatrième ailette (31d), comprenant une extrémité transversalement externe positionnée transversalement à l'extérieur par rapport à celle de la quatrième ailette (31d).

5. Motocyclette selon au moins l'une des revendications 1 à 4, **caractérisée par**
un élément intra-circuit (21f) agencé dans le circuit de guidage du vent (21e) et adapté pour guider vers le radiateur (17) l'air écoulé dans une partie du circuit de guidage du vent (21e) positionnée transversalement à l'intérieur par rapport au radiateur (17).

6. Motocyclette selon la revendication 5, **caractérisée par**
un carénage de fond (21c) recouvrant la partie de châssis de fond (9c) depuis un côté de fond de la partie de châssis de fond (9c), dans laquelle l'élément intra-circuit (21f) est un élément de paroi (21f1, 21f2) qui s'étend vers le haut à partir du carénage de fond (21c), et
une extrémité avant de l'élément de paroi (21f1, 21f2) est positionnée transversalement à l'intérieur par rapport au radiateur (17) et une extrémité arrière de l'élément de paroi (21f1, 21f2) est positionnée transversalement à l'extérieur par rapport à l'extrémité avant de l'élément de paroi (21f1, 21f2).

7. Motocyclette selon la revendication 6, **caractérisée en ce que**
l'élément de paroi comprend une pluralité de parties de paroi (21f1, 21f2) agencées dans le circuit de guidage du vent (21e).

8. Motocyclette selon au moins l'une des revendications 1 à 7, **caractérisée par**
un panneau interne (20b) agencé à l'avant du repose-pied (21a), dans laquelle le panneau interne (20b) comprend au moins une ouverture (20b1, 20b2, 20b3, 20b4) qui communique avec le circuit de guidage du vent (21e).

9. Motocyclette selon la revendication 8, **caractérisée en ce que**
l'ouverture (20b3, 20b4) est positionnée au moins partiellement plus bas que le repose-pied (21a).

10. Motocyclette selon la revendication 8 ou 9, **caractérisée en ce que**
le panneau interne (20b) comprend une pluralité d'ouvertures (20b1, 20b2, 20b3, 20b4) et une première ouverture (20b1) ainsi qu'une deuxième ouverture (20b1) sont espacées transversalement l'une par rapport à l'autre.

11. Motocyclette selon au moins l'une des revendications 1 à 10, **caractérisée en ce que**
le moteur (15) est agencé à l'arrière du repose-pied (21a).

12. Motocyclette selon au moins l'une des revendications 1 à 10, **caractérisée par**
un repose-pied arrière (18a, 18b) agencé transversalement à l'extérieur par rapport au carénage latéral (20d).
